# EUROPÄISCHE PATENTANMELDUNG

(11) **EP 2 662 848 A2**
(43) Veröffentlichungstag der Anmeldung: **13.11.2013**
(21) Anmeldenummer: 13158755.2
(22) Anmeldetag: 12.03.2013
(51) Int. Cl.: G08G 1/16, G08G 1/01, G07C 5/00

(54) **Verfahren zur Erstellung eines Fahrprofils**

(30) Priorität: 11.05.2012 DE 102012207859
(71) Anmelder: ROBERT BOSCH GMBH, 70442 Stuttgart (DE)
(72) Erfinder: Fuehrer, Thomas, 70499 Stuttgart-Weilimdorf (DE)

(57) **Zusammenfassung**

Ein Verfahren zum Erstellen eines Fahrprofils umfasst Schritte zum Aufzeichnen eines Werts einer Betriebseigenschaft eines Kraftfahrzeugs durch einen in dem Kraftfahrzeugs angeordneten Sensor zu einem ersten Zeitpunkt, zum Verknüpfen des Werts mit einer eine Position des Kraftfahrzeugs angebenden Ortsinformation, um eine verknüpfte Information zu erhalten, zum Übertragen der verknüpften Information an einen Server, zum Auswerten einer Mehrzahl verknüpfter Informationen, um ein Fahrprofil zu ermitteln, das ortsabhängige Werte der Betriebseigenschaft umfasst, zum Übertragen des Fahrprofils an das Kraftfahrzeug, und zum Ermitteln einer Abweichung zwischen einem Wert der Betriebseigenschaft des Kraftfahrzeugs und einem durch das Fahrprofil umfassten Werts der Betriebseigenschaft an einer Position des Kraftfahrzeugs zu einem zweiten Zeitpunkt.

## Beschreibung

Die Erfindung betrifft ein Verfahren zum Erstellen eines Fahrprofils gemäß Patentanspruch 1.

### Stand der Technik

Es ist bekannt, Kraftfahrzeuge mit Radarsystemen auszustatten. Solche Radarsysteme können beispielsweise Fern- oder Mittelbereichsradarsysteme sein. Die Radarsysteme können dazu genutzt werden, einen Abstand zwischen einem Kraftfahrzeug und einem Vorausfahrenden und/oder einem nachfolgenden weiteren Kraftfahrzeug zu ermitteln. Die Ermittlung des Abstands kann im Rahmen einer Sicherheitsfunktion dazu dienen, eine drohende Kollision zu erkennen und durch Ausgabe einer Warnung an einen Fahrzeugführer und/oder durch eine automatische Fahrerbremsunterstützung zu verhindern. Die Abstandsermittlung kann alternativ oder zusätzlich auch in einem Fahrerassistenzsystem, das für einen Eingriff in ein Motormanagement und/oder ein Bremsmanagement des Kraftfahrzeugs ausgebildet ist, zur Geschwindigkeits- und/oder Distanzregelung dienen.

Ebenfalls bekannt ist, Kraftfahrzeuge mit Navigationssystemen auszustatten, die dazu ausgebildet sind, eine gegenwärtige Position eines Kraftfahrzeugs zu ermitteln. Die Positionsbestimmung kann dabei beispielsweise unter Verwendung von GPS-Signalen erfolgen.

### Offenbarung der Erfindung

Die Aufgabe der vorliegenden Erfindung besteht darin, ein verbessertes Verfahren zum Erstellen eines Fahrprofils anzugeben. Diese Aufgabe wird durch ein Verfahren mit den Merkmalen des Anspruchs 1 gelöst. Bevorzugte Weiterbildungen sind in den abhängigen Ansprüchen angegeben.

Ein erfindungsgemäßes Verfahren zum Erstellen eines Fahrprofils umfasst Schritte zum Aufzeichnen eines Werts einer Betriebseigenschaft eines Kraftfahrzeugs durch einen in dem Kraftfahrzeug angeordneten Sensor zu einem ersten Zeitpunkt, zum Verknüpfen des Wertes mit einer eine Position des Kraftfahrzeugs angebenden Ortinformation, um eine verknüpfte Information zu erhalten, zum Übertragen der verknüpften Information an einen Server, zum Auswerten einer Mehrzahl verknüpfter Informationen, um ein Fahrprofil zu ermitteln, das ortsabhängige Werte der Betriebseigenschaft umfasst, zum Übertragen des Fahrprofils an das Kraftfahrzeug, und zum Ermitteln einer Abweichung zwischen einem Wert der Betriebseigenschaft des Kraftfahrzeugs und einem durch das Fahrprofil umfassten Wert der Betriebseigenschaft an einer Position des Kraftfahrzeugs zu einem zweiten Zeitpunkt. Vorteilhafterweise erlaubt dieses Verfahren eine Erstellung eines optimierten Fahrprofils und eine Übermittlung des optimierten Fahrprofils an das Kraftfahrzeug. Vorteilhafterweise sind zur Erstellung des optimierten Fahrprofils lediglich Daten erforderlich, die in einem mit einem Sensor und einer Einrichtung zur Positionsbestimmung ausgestatteten Kraftfahrzeugs ohnehin ermittelt werden. Dadurch lässt sich das Verfahren vorteilhafterweise mit geringem Aufwand implementieren.

In einer bevorzugten Ausführungsform des Verfahrens umfasst dieses einen weiteren Schritt zum Ausgeben einer Information über die Abweichung an einen Fahrzeugführer des Kraftfahrzeugs. Vorteilhafterweise kann der Fahrzeugführer des Kraftfahrzeugs dadurch angehalten werden, sich an einer durch das Fahrprofil vorgegebenen Fahrweise zu orientieren. Vorteilhafterweise kann hierdurch ein Unfall risiko deutlich reduziert werden. Ein weiterer Vorteil kann darin bestehen, dass der Fahrer von einem versehentlichen oder vorsätzlichen Begehen von Gesetzesverstößen abgehalten wird.

In einer weiteren bevorzugten Ausführungsform des Verfahrens umfasst dieses einen weiteren Schritt zum Ansteuern eines Fahrerassistenzsystems des Kraftfahrzeugs derart, dass die Abweichung reduziert wird. Vorteilhafterweise wird dadurch sichergestellt, dass das Kraftfahrzeug einer durch das Fahrprofil vorgegebenen Fahrweise entsprechend geführt wird. Hierdurch lässt sich vorteilhafterweise besonders wirksam ein Unfallrisiko reduzieren. Auch werden vorteilhafterweise vorsätzliche oder versehentliche Gesetzesverstöße vermieden. Beispielsweise können vorteilhafterweise Geschwindigkeitsübertretungen vermieden oder reduziert werden.

In einer bevorzugten Ausführungsform des Verfahrens ist die Betriebseigenschaft eine Geschwindigkeit oder eine Beschleunigung oder eine Bremsverzögerung des Kraftfahrzeugs, ein Abstand zwischen dem Kraftfahrzeug und einem vorausfahrenden oder einem nachfolgenden weiteren Kraftfahrzeug, oder eine gewählte Schaltstufe des Kraftfahrzeugs. Vorteilhafterweise können alle diese Betriebseigenschaften gewinnbringend zur Erstellung eines optimierten Fahrprofils genutzt werden.

In einer zweckmäßigen Ausführungsform des Verfahrens umfasst das Fahrprofil ortsabhängige Werte mehrerer Betriebseigenschaften. Vorteilhafterweise gibt das Fahrprofil eine optimierte Fahrweise dann besonders genau wieder.

In einer bevorzugten Ausführungsform des Verfahrens senden eine Mehrzahl von Kraftfahrzeugen verknüpfte Informationen an den Server. Vorteilhafterweise stehen bei der Auswertung der verknüpften Informationen und der Ermittlung des Fahrprofils dann eine besonders große Vielzahl an verknüpften Informationen zur Verfügung. Dies erlaubt vorteilhafterweise eine Berücksichtigung statistischer Zusammenhänge und Häufungen. Die Auswertung einer größeren Zahl verknüpfter Informationen ermöglicht es außerdem, dass fehlerhafte oder gestörte Daten herausgefiltert oder herausgemittelt werden.

In einer Weiterbildung des Verfahrens wird das Fahrprofil an eine Mehrzahl von Kraftfahrzeugen übertragen. Die Kraftfahrzeuge können dabei beispielsweise Kraftfahrzeuge einer zusammengehörigen Fahrzeugflotte sein. Vorteilhafterweise können die Mehrzahl der Kraftfahrzeuge und die Fahrzeugführer der Mehrzahl von Kraftfahrzeugen dann zu einer einheitlichen Fahrweise angehalten werden.

In einer zweckmäßigen Ausführungsform des Verfahrens ist ein durch das Fahrprofil umfasster Wert der Betriebseigenschaft ein Durchschnittswert der an den Server gesendeten Werte der Betriebseigenschaft. Vorteilhafterweise wird der im Fahrprofil enthaltene optimierte Wert der Betriebseigenschaft dann als Durchschnitt typischer Werte der Betriebseigenschaft gebildet.

In einer Weiterbildung des Verfahrens sind die durch das Fahrprofil umfassten ortsabhängigen Werte der Betriebseigenschaft so gewählt, dass eine maximal zulässige Geschwindigkeit nicht überschritten und/oder ein minimaler Abstand zwischen einem Kraftfahrzeug und einem vorausfahrenden oder einem nachfolgenden weiteren Kraftfahrzeug nicht unterschritten wird. Vorteilhafterweise wird das Fahrprofil dann bei seiner Ermittlung dahingehend optimiert, dass ein Betrieb eines Kraftfahrzeugs gemäß der vom Fahrprofil umfassten Werte der Betriebseigenschaft zu einer besonders sicheren und regelkonformen Fahrweise führt. Hierdurch lässt sich vorteilhafterweise ein Unfallrisiko deutlich reduzieren.

In einer zweckmäßigen Ausführungsform des Verfahrens ist der Sensor ein Radarsensor. Vorteilhafterweise eignen sich Radarsensoren zur Ermittlung eines Abstands zwischen einem Kraftfahrzeug und umgebenden weiteren Kraftfahrzeugen. Vorteilhafterweise sind Kraftfahrzeuge in vielen Fällen ohnehin mit derartigen Sensoren ausgestattet. Dadurch lässt sich das Verfahren vorteilhafterweise ohne großen zusätzlichen Aufwand umsetzen.

Die Erfindung wird nun anhand der beigefügten Figuren näher erläutert. Dabei zeigen:
Figur 1 ein schematisches Blockschaltbild eines Kraftfahrzeugs und eines Servers;
Figur 2 ein schematisches Ablaufdiagramm eines Verfahrens zum Erstellen eines Fahrprofils;
Figur 3 eine schematische Darstellung einer verknüpften Information; und
Figur 4 eine schematische Darstellung eines Teils eines Fahrprofils.

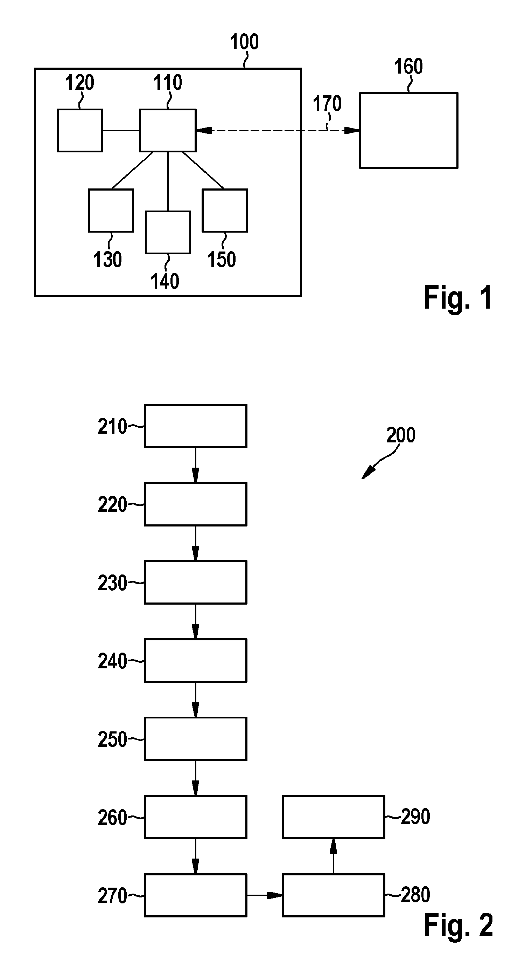

Figur 1 zeigt eine schematische Darstellung eines Kraftfahrzeugs 100. Das Kraftfahrzeug 100 kann beispielsweise ein Personenkraftwagen (PKW) sein. Das Kraftfahrzeug 100 kann jedoch auch ein Lieferwagen, ein Lastkraftwagen (LKW) oder ein anderes Kraftfahrzeug sein. Das Kraftfahrzeug 100 kann einer Flotte zusammengehöriger Kraftfahrzeuge angehören. Beispielsweise kann das Kraftfahrzeug 100 Teil einer Flotte von Lieferfahrzeugen einer Spedition oder eines Paketdienstes sein.

Das Kraftfahrzeug 100 weist eine Steuereinheit 110 auf. Die Steuereinheit 110 ist bevorzugt als Kombination aus Hardware- und Software-Komponenten realisiert. Beispielsweise kann die Steuereinheit 110 einen Mikrocontroller oder einen Mikrocomputer umfassen, auf dem ein Programm läuft. Die Steuereinheit 110 kann außerdem flüchtige und nicht flüchtige Datenspeicher umfassen.

Das Kraftfahrzeug 100 weist außerdem mindestens einen Sensor 120 auf. Der Sensor 120 kann zum Ermitteln eines Werts einer Betriebseigenschaften des Kraftfahrzeugs 100 verwendet werden. Der Begriff "Betriebseigenschaft" bezeichnet im Kontext dieser Beschreibung jede Größe und Information, die einen Betriebsmodus, eine Betriebsweise oder allgemein den Betrieb des Kraftfahrzeugs 100 charakterisiert und quantifiziert.

Die Betriebseigenschaft des Kraftfahrzeugs 100 kann beispielsweise eine Geschwindigkeit des Kraftfahrzeugs 100 sein. In diesem Fall ist der Sensor 120 ausgebildet, eine Geschwindigkeit des Kraftfahrzeugs zu ermitteln. Die Betriebseigenschaft des Kraftfahrzeugs 100 kann auch eine Beschleunigung oder eine Bremsverzögerung des Kraftfahrzeugs sein. In diesem Fall ist der Sensor 120 ausgebildet, eine Beschleunigung oder eine Bremsverzögerung des Kraftfahrzeugs 100 zu ermitteln. Die Betriebseigenschaft des Kraftfahrzeugs 100 kann auch eine gewählte Schaltstufe eines Schaltgetriebes des Kraftfahrzeugs sein. In diesem Fall ist der Sensor 120 ausgebildet, die gewählte Schaltstufe des Kraftfahrzeugs 100 zu bestimmen.

Die Betriebseigenschaft des Kraftfahrzeugs 100 kann auch ein Abstand zwischen dem Kraftfahrzeug 100 und einem vorausfahrenden weiteren Kraftfahrzeug oder einem dem Kraftfahrzeug 100 nachfolgenden weiteren Kraftfahrzeug sein. In diesem Fall ist der Sensor 120 ausgebildet, einen solchen Abstand zu ermitteln. Bevorzugt ist der Sensor 120 dann als Radarsensor, beispielsweise als Fern- oder Mittelbereichsradarsensor ausgebildet.

Der Sensor 120 kann auch eine Videokamera, eine Stereo-Videokamera, ein scannender Lidarsensor (Light detection and ranging) oder ein scannender Radarsensor sein. Auch solche Sensoren eignen sich zur Analyse einer Umgebung des Kraftfahrzeugs 100 und zur Ermittlung von Abständen zwischen dem Kraftfahrzeug 100 und umgebenden weiteren Kraftfahrzeugen.

Das Kraftfahrzeug 100 kann auch mehrere Sensoren 120 aufweisen. Die mehreren Sensoren 120 dienen dann bevorzugt dazu, Werte mehrerer unterschiedlicher Betriebseigenschaften des Kraftfahrzeugs 100 zu ermitteln. Beispielsweise kann das Kraftfahrzeug 100 einen ersten Radarsensor zur Ermittlung eines Abstands zwischen dem Kraftfahrzeug 100 und einem vorausfahrenden weiteren Kraftfahrzeug, einen zweiten Radarsensor zur Ermittlung eines Abstands zwischen dem Kraftfahrzeug 100 und einem nachfolgenden weiteren Kraftfahrzeug und einen Geschwindigkeitssensor zum Ermitteln einer Geschwindigkeit des Kraftfahrzeugs 100 aufweisen.

Das Kraftfahrzeug 100 umfasst in der in Figur 1 dargestellten beispielhaften Ausführungsform außerdem ein Fahrerassistenzsystem 130. Das Fahrerassistenzsystem kann auch als Adaptive Cruise Control (ACC) bezeichnet werden. Das Fahrerassistenzsystem 130 kann dazu dienen, eine automatische Geschwindigkeits- und/oder Distanzregelung des Kraftfahrzeugs 100 durchzuführen. Hierzu kann das Fahrerassistenzsystem 130 dazu ausgebildet sein, Eingriffe in ein Motormanagement und/oder ein Bremsmanagement des Kraftfahrzeugs 100 vorzunehmen. Das Fahrerassistenzsystem 130 kann hierfür auch dazu ausgebildet sein, vom Sensor 120 ermittelte Werte einer oder mehrerer Betriebseigenschaften des Kraftfahrzeugs 100 zu empfangen. Insbesondere kann das Fahrerassistenzsystem 130 ausgebildet sein, Abstandswerte von einem Radarsensor zu empfangen. In einer vereinfachten Ausführungsform des Kraftfahrzeugs 100 kann das Fahrerassistenzsystem 130 jedoch auch entfallen.

Das Kraftfahrzeug 100 umfasst außerdem ein Navigationssystem 140. Das Navigationssystem 140 ist dazu ausgebildet, eine Position des Kraftfahrzeugs 100 zu ermitteln. Das Navigationssystem 140 kann beispielsweise dazu ausgebildet sein, die Position des Kraftfahrzeugs 100 durch Empfang eines GPS-Signals zu bestimmen.

Das Kraftfahrzeug 100 umfasst außerdem eine Anzeigevorrichtung 150. Die Anzeigevorrichtung 150 dient dazu, einem Fahrzeugführer des Kraftfahrzeugs 100 Informationen anzuzeigen. Die Anzeigevorrichtung 150 kann beispielsweise als Bildschirm oder als Lämpchen ausgebildet sein. Das Kraftfahrzeug 100 kann auch mehrere Anzeigevorrichtungen 150 aufweisen. Die Anzeigevorrichtung 150 kann auch Teil des Fahrerassistenzsystems 130 oder des Navigationssystems 140 sein oder durch das Fahrerassistenzsystem 130 und/oder das Navigationssystem 140 benutzt werden.

Die Steuereinheit 110 des Kraftfahrzeugs 100 ist mit dem Sensor 120, dem Fahrerassistenzsystem 130, dem Navigationssystem 140 und der Anzeigevorrichtung 150 verbunden. Über die Verbindungen kann die Steuereinheit 110 Daten und Informationen mit dem Sensor 120, dem Fahrerassistenzsystem 130, dem Navigationssystem 140 und der Anzeigevorrichtung 150 austauschen und den Sensor 120, das Fahrerassistenzsystem 130, das Navigationssystem 140 und die Anzeigevorrichtung 150 ansteuern.

Die schematische Darstellung der Figur 1 zeigt außerdem einen Server 160. Der Server 160 ist außerhalb des Kraftfahrzeugs 100 angeordnet. Der Server 160 kann beispielsweise ein Computer in einem Rechenzentrum sein. Der Server 160 kann auch durch eine Mehrzahl vernetzter Computer realisiert sein, die in einem oder mehreren Rechenzentren angeordnet sind. Der Server 160 kann Teil einer Cloud-Infrastruktur oder Teil eines Dienstes eines Sozialen Netzwerks sein. Falls das Kraftfahrzeug 100 Teil einer Fahrzeugflotte ist, so kann der Server 160 insbesondere ein Server eines Betreibers der Fahrzeugflotte sein.

Die Steuereinheit 110 des Kraftfahrzeugs 100 ist dazu ausgebildet, über eine bidirektionale Kommunikationsverbindung 170 mit dem Server 160 zu kommunizieren. Die bidirektionale Kommunikationsverbindung 170 ist bevorzugt eine drahtlose Kommunikationsverbindung. Beispielsweise kann die bidirektionale Kommunikationsverbindung 170 als Verbindung gemäß eines Internetprotokolls über ein Mobilfunknetzwerk ausgebildet sein. Hierzu ist die Steuereinheit 110 dann mit geeigneten Sende- und Empfangseinheiten verbunden oder ausgestattet.

Figur 2 zeigt ein schematisches Ablaufdiagramm eines Verfahrens 200 zum Erstellen eines Fahrprofils. Das Verfahren 200 wird teilweise durch die Steuereinheit 110 des Kraftfahrzeugs 100 und teilweise durch den Server 160 ausgeführt, wie nachfolgend noch erläutert wird.

In einem ersten Verfahrensschritt 210 ermittelt die Steuereinheit 110 einen Wert einer Betriebseigenschaft des Kraftfahrzeugs 100. Hierzu empfängt die Steuereinheit 110 einen durch den Sensor 120 ermittelten Wert. Die Steuereinheit 110 kann auch mehrere durch mehrere Sensoren 120 ermittelte Werte empfangen. Beispielsweise kann die Steuereinheit 110 im ersten Verfahrensschritt 210 eine Geschwindigkeit des Kraftfahrzeugs 100 sowie einen Abstand des Kraftfahrzeugs 100 von einem dem Kraftfahrzeug 100 vorausfahrenden weiteren Kraftfahrzeug aufzeichnen.

In einem zweiten Verfahrensschritt 220 ermittelt die Steuereinheit 110 eine Position des Kraftfahrzeugs 100. Die Position des Kraftfahrzeugs 100 wird möglichst gleichzeitig mit dem im ersten Verfahrensschritt 210 aufgezeichneten Wert der Betriebseigenschaft des Kraftfahrzeugs 100 ermittelt. Die Steuereinheit 110 ermittelt die Position des Kraftfahrzeugs 100 mit Hilfe des Navigationssystem 140. Die ermittelte Position des Kraftfahrzeugs 100 kann auch als Ortsinformation bezeichnet werden.

In einem dritten Verfahrensschritt 230 verknüpft die Steuereinheit 110 den im ersten Verfahrensschritt 210 aufgezeichneten Wert der Betriebseigenschaft des Kraftfahrzeugs 100 mit der im zweiten Verfahrensschritt 220 ermittelten Ortsinformation, um eine verknüpfte Information zu erhalten.

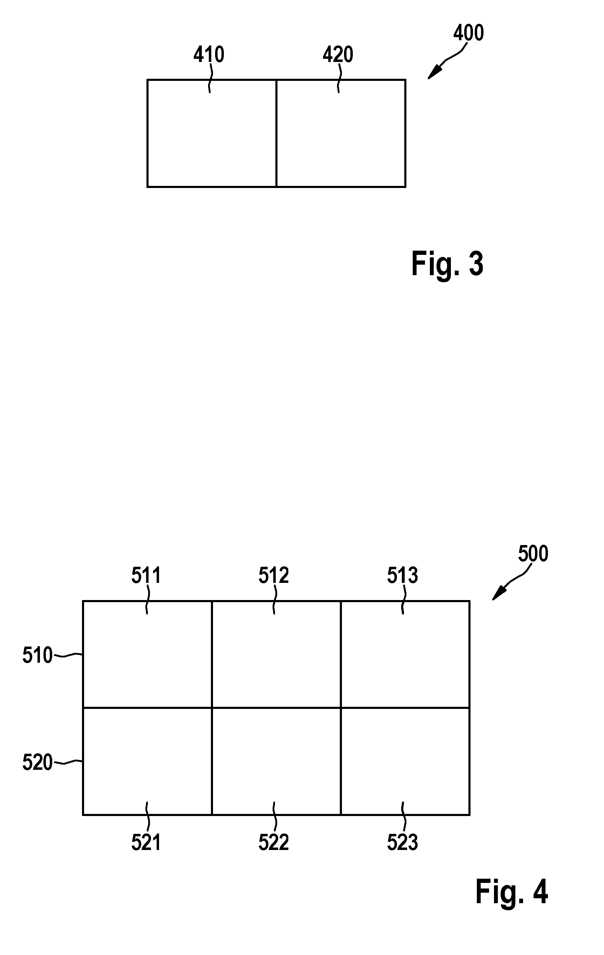

Figur 3 zeigt eine schematische Darstellung einer verknüpften Information 400. Die verknüpfte Information 400 umfasst einen im ersten Verfahrensschritt 210 ermittelten Wert 410 einer Betriebseigenschaft des Kraftfahrzeugs 100 und eine im zweiten Verfahrensschritt 220 ermittelte Ortsinformation 420, die eine Position des Kraftfahrzeugs 100 zu dem Zeitpunkt angibt, an dem der Wert 410 der Betriebseigenschaft aufgezeichnet wurde.

In einem vierten Verfahrensschritt 240 übermittelt die Steuereinheit 110 die im dritten Verfahrensschritt erhaltene verknüpfte Information 400 über die bidirektionale Kommunikationsverbindung 170 an den Server 160.

Der erste Verfahrensschritt 210, der zweite Verfahrensschritt 220, der dritte Verfahrensschritt 230 und der vierte Verfahrensschritt 240 werden bevorzugt vielmals wiederholt. Besonders bevorzugt werden die Verfahrensschritte 210, 220, 230, 240 während einer Fahrt des Kraftfahrzeugs 100 kontinuierlich, beispielsweise einmal pro Sekunde oder einmal pro Minute, wiederholt. Auf diese Weise werden eine Vielzahl ortsabhängiger Werte 410 einer oder mehrere Betriebseigenschaften des Kraftfahrzeugs 100 an den Server 160 übertragen.

Falls das Kraftfahrzeug 100 Teil einer Flotte zusammengehöriger Kraftfahrzeuge ist, so führen bevorzugt alle Kraftfahrzeuge 100 der Fahrzeugflotte den ersten Verfahrensschritt 210, den zweiten Verfahrensschritt 220, den dritten Verfahrensschritt 230 und den vierten Verfahrensschritt 240 wiederholt durch. Auf diese Weise werden ortsabhängige Werte 410 einer oder mehrerer Betriebseigenschaften mehrerer Kraftfahrzeuge 100 mit unterschiedlichen Fahrzeugführern an den Server 160 übertragen.

In einem fünften Verfahrensschritt 250 wertet der Server 160 die an den Server 160 übertragene Mehrzahl verknüpfter Informationen 400 aus, um ein Fahrprofil zu ermitteln, das ortsabhängige Werte einer oder mehrerer Betriebseigenschaften des Kraftfahrzeugs 100 umfasst.

Figur 4 zeigt eine schematische Darstellung eines Fahrprofils 500, das durch den Server 160 ermittelt wird. Das Fahrprofil 500 ist als Tabelle oder Liste mit einem ersten Eintrag 510 und einem zweiten Eintrag 520 aufgebaut. Der erste Eintrag 510 des Fahrprofils 500 umfasst eine erste Ortsinformation 511, einen ersten Wert 512 einer ersten Betriebseigenschaft und einen ersten Wert 513 einer zweiten Betriebseigenschaft. Der zweite Eintrag 520 des Fahrprofils 500 umfasst eine zweite Ortsinformation 521, einen zweiten Wert 522 der ersten Betriebseigenschaft und einen zweiten Wert 523 der zweiten Betriebseigenschaft. Die ersten Werte 512, 513 der ersten und der zweiten Betriebseigenschaft sind dabei der Ortsinformation 511 zugeordnet. Die zweiten Werte 522, 523 sind der zweiten Ortsinformation 521 zugeordnet. Bevorzugt umfasst das Fahrprofil 500 eine große Anzahl weiterer Einträge 510, 520, in denen weitere ortsabhängige Werte der ersten und der zweiten Betriebseigenschaft angegeben sind. Das Fahrprofil 500 kann auch Werte lediglich einer Betriebseigenschaft oder, bevorzugt, Werte von mehr als zwei Betriebseigenschaften umfassen.

Das Fahrprofil 500 stellt ein optimiertes Fahrprofil zum Führen bzw. Betreiben des Kraftfahrzeugs 100 dar. Wird das Kraftfahrzeug 100 so gefahren, dass an jedem von dem Kraftfahrzeug 100 befahrenen Ort die Werte der Betriebseigenschaften des Kraftfahrzeugs 100 etwa den im Fahrprofil 500 für diesen Ort angegebenen Werten der Betriebseigenschaften entsprechen, so besteht eine besonders geringe Gefahr eines Unfalls oder eines Verstoßes gegen Verkehrsregeln. Der Server 160 kann bei der Auswertung der Mehrzahl verknüpfter Informationen 400 im fünften Verfahrensschritt 250 beispielsweise Durchschnittswerte der für jeden Ort an den Server 160 übersandten Werte einer Betriebseigenschaft bilden, statistische Zusammenhänge und Häufungen analysieren und die durch den Server 160 gesammelten verknüpften Informationen 400 harmonisieren. Die durch den Server 160 erhaltenen verknüpften Informationen 400 können auch mit in einer Datenbank des Servers 160 hinterlegten Werten über vorgeschriebene oder empfohlene Werte von Betriebseigenschaften verglichen werden. Beispielsweise können durch den Server 160 empfangene orstabhängige Geschwindigkeitswerte mit an diesen Orten zulässigen Maximalgeschwindigkeiten verglichen werden. Das Fahrprofil 500 kann dann so angelegt werden, dass maximal zulässige Geschwindigkeiten an keinem Ort überschritten werden. Das Fahrprofil 500 kann auch so angelegt werden, dass ein festgelegter minimaler Abstand zwischen dem Kraftfahrzeug 100 und vorausfahrenden oder nachfolgenden weiteren Kraftfahrzeugen an keinem Ort unterschritten wird. Durch diese und ähnliche Maßnahmen wird das Fahrprofil 500 durch den Server 160 so erstellt, dass eine Optimierung der durch die verknüpften Informationen 400 angegebenen Ist-Werte zu im Fahrprofil 500 enthaltenen Soll-Werten erfolgt.

In einem sechsten Verfahrensschritt 260 wird das durch den Server 160 im fünften Verfahrensschritt 250 ermittelte Fahrprofil 500 an das Kraftfahrzeug 100 übertragen. Die Übertragung erfolgt bevorzugt über die bidirektionale Kommunikationsverbindung 170. Ist das Kraftfahrzeug 100 Teil einer Fahrzeugflotte zusammengehöriger Kraftfahrzeuge, so kann das Fahrprofil 500 an mehrere Kraftfahrzeuge 100 der Fahrzeugflotte übertragen werden.

In einem siebten Verfahrensschritt 270 ermittelt die Steuereinheit 110 des Kraftfahrzeugs 100 eine Abweichung zwischen einem Wert einer Betriebseigenschaft des Kraftfahrzeugs 100, den die Steuereinheit 110 durch den Sensor 120 ermitteln lässt, und einem durch das Fahrprofil 500 umfassten Wert dieser Betriebseigenschaft für die Position, an der sich das Kraftfahrzeug 100 zu diesem Zeitpunkt befindet. Im siebten Verfahrensschritt 270 ermittelt die Steuereinheit 110 somit mittels des Sensor 120 einen Wert einer Betriebseigenschaft des Kraftfahrzeugs 100. Außerdem ermittelt die Steuereinheit 110 mittels des Navigationssystems 140 eine Ortsinformation des Kraftfahrzeugs 100, die eine gegenwärtige Position des Kraftfahrzeugs 100 angibt. Die Steuereinheit 110 entnimmt dem Fahrprofil 500 einen Eintrag 510, 520, dessen Ortsinformation 511, 512 der durch das Navigationssystem 140 ermittelten Ortsinformation entspricht, und entnimmt diesem Eintrag 510, 520 einen Wert 512, 513, 522, 523 der Betriebseigenschaft. Den durch den Sensor 120 ermittelten Wert der Betriebseigenschaft vergleicht die Steuereinheit 110 mit dem dem Fahrprofil 500 entnommenen Wert der Betriebseigenschaft und ermittelt eine Abweichung.

In einem achten Verfahrensschritt 280 kann die Steuereinheit 110 eine im siebten Verfahrensschritt 270 ermittelte Abweichung über die Anzeigevorrichtung 150 dem Fahrzeugführer des Kraftfahrzeugs 100 anzeigen. Hierdurch kann der Fahrzeugsführer des Kraftfahrzeugs 100 angewiesen werden, den Wert der Betriebseigenschaft dem im Fahrprofil 500 enthaltenen optimalen Wert der Betriebseigenschaft anzupassen. Falls die Betriebseigenschaft eine Geschwindigkeit des Kraftfahrzeugs 100 ist, so kann die Steuereinheit 110 dem Fahrzeugführer im achten Verfahrensschritt 280 beispielsweise anzeigen, dass die gegenwärtige Geschwindigkeit des Kraftfahrzeugs 100 über der im Fahrprofil 500 enthaltenen optimalen Geschwindigkeit des Kraftfahrzeugs 100 liegt. Der Fahrzeugsführer kann das Kraftfahrzeug 100 dann abbremsen.

In einem zum achten Verfahrensschritt 280 alternativen oder zusätzlichen neunten Verfahrensschritt 290 kann die Steuereinheit 110 das Fahrerassistenzsystem 130 anweisen, den Wert der Betriebseigenschaft 100 automatisch an den dem Fahrprofil 500 entnommenen optimalen Wert der Betriebseigenschaft anzugleichen. Das Fahrerassistenzsystem 130 kann das Kraftfahrzeug 100 dann beispielsweise selbständig abbremsen.

In einer allgemeinen Ausführungsform dient das Verfahren 200 zur Nutzung der ohnehin im Kraftfahrzeug 100 enthaltenen Sensoren 120 zur Sammlung von Fahrerverhalten und Fahrprofilen einzelner Fahrzeugführer einer Flotte von Kraftfahrzeugen 100. Diese Informationen beinhalten beispielsweise Geschwindigkeits-, Abstands-, Beschleunigungs-, Bremsinformation und ggf. weitere Informationen wie eine Schaltstufe eines Getriebes. Die Profile einzelner Fahrzeugführer werden mit einer zurückgelegten Strecke verkettet (tagging) und in einer Karte hinterlegt. All diese Informationen werden über den Server 160, beispielsweise Dienste einer Daten-Cloud oder eines Sozialen Netzwerks, z. B. des Flottenbetreibers oder dessen Dienstleisters, zentral gesammelt. Die gesammelten Daten können nun analysiert (z. B. statistische Zusammenhänge, Häufungen) und harmonisiert werden (z. B. Geschwindigkeiten einzelner Fahrer ergeben eine Durchschnittsgeschwindigkeit). Desweiteren erfolgt nun die Optimierung der Profile zur Erhöhung der Verkehrssicherheit oder Vermeidung von Strafen. So können beispielsweise die optimale Geschwindigkeit (z. B. Durchschnittsgeschwindigkeit) gefunden werden oder auch die Überschreitungen im Vergleich zur an einem Ort vorliegenden Richtgeschwindigkeit herausgefunden werden und für ein ideales Profil angepasst werden. So erfolgt eine zentrale Erstellung eines neuen Fahrprofils für bestimmte Streckenabschnitte. Das Verfahren erlaubt nun die Aussendung dieser idealen Fahrprofile (Geschwindigkeit, Abstand, Beschleunigungs- und Bremsverhalten) an alle Flottenfahrer bzw. Fahrzeuge mit entsprechender Ausstattung mit Sicherheits- und ACC-Sensoren über die Cloud-Dienste oder Sozialen Netzwerke des Flottenbetreibers.

Damit resultiert, dass nun alle Flottenfahrer über Warnhinweise am Display/Navigationsgerät oder über ACC zur Einhaltung der neuen Fahrprofile angehalten werden. Damit wird das Unfallrisiko deutlich reduziert oder Geldstrafen bzw. Führerscheinentzug vermieden.

## Patentansprüche

1. Verfahren (200) zum Erstellen eines Fahrprofils,
mit den folgenden Schritten:
- Aufzeichnen eines Werts (410) einer Betriebseigenschaft eines Kraftfahrzeugs (100) durch einen in dem Kraftfahrzeug angeordneten Sensor (120) zu einem ersten Zeitpunkt;
- Vernüpfen des Werts (410) mit einer eine Position des Kraftfahrzeugs (100) angebenden Ortsinformation (420), um eine verknüpfte Information (400) zu erhalten;
- Übertragen der verknüpften Information (400) an einen Server (160);
- Auswerten einer Mehrzahl verknüpfter Informationen (400), um ein Fahrprofil (500) zu ermitteln, das ortsabhängige Werte (512, 522) der Betriebseigenschaft umfasst;
- Übertragen des Fahrprofils (500) an das Kraftfahrzeug (100);
- Ermitteln einer Abweichung zwischen einem Wert der Betriebseigenschaft des Kraftfahrzeugs (100) und einem durch das Fahrprofil (500) umfassten Wert (512, 522) der Betriebseigenschaft an einer Position des Kraftfahrzeugs (100) zu einem zweiten Zeitpunkt.

2. Verfahren (200) gemäß Anspruch 1,
mit dem folgenden weiteren Schritt:
- Ausgeben einer Information über die Abweichung an einen Fahrzeugführer des Kraftfahrzeugs (100).

3. Verfahren (200) gemäß einem der vorhergehenden Ansprüche,
mit dem folgenden weiteren Schritt:
- Ansteuern eines Fahrerassistenzsystems (130) des Kraftfahrzeugs (100) derart, dass die Abweichung reduziert wird.

4. Verfahren (200) gemäß einem der vorhergehenden Ansprüche,
wobei die Betriebseigenschaft eine Geschwindigkeit oder eine Beschleunigung oder eine Bremsverzögerung des Kraftfahrzeugs (100),
ein Abstand zwischen dem Kraftfahrzeug (100) und einem vorausfahrenden oder einem nachfolgenden weiteren Kraftfahrzeug,
oder eine gewählte Schaltstufe des Kraftfahrzeugs (100) ist.

5. Verfahren (200) gemäß einem der vorhergehenden Ansprüche,
wobei das Fahrprofil (500) ortsabhängige Werte (512, 522, 513, 523) mehrerer Betriebseigenschaften umfasst.

6. Verfahren (200) gemäß einem der vorhergehenden Ansprüche,
wobei eine Mehrzahl von Kraftfahrzeugen (100) verknüpfte Informationen (400) an den Server (160) senden.

7. Verfahren (200) gemäß einem der vorhergehenden Ansprüche,
wobei das Fahrprofil (500) an eine Mehrzahl von Kraftfahrzeugen (100) übertragen wird.

8. Verfahren (200) gemäß einem der vorhergehenden Ansprüche,
wobei ein durch das Fahrprofil (500) umfasster Wert (512, 522) der Betriebseigenschaft ein Durchschnittswert der an den Server (160) gesendeten Werte (410) der Betriebseigenschaft ist.

9. Verfahren (200) gemäß einem der vorhergehenden Ansprüche,
wobei die durch das Fahrprofil (500) umfassten ortsabhängigen Werte (512, 522) der Betriebseigenschaft so gewählt sind, dass eine maximal zulässige Geschwindigkeit nicht überschritten und/oder ein minimaler Abstand zwischen einem Kraftfahrzeug (100) und einem vorausfahrenden oder einem nachfolgenden weiteren Kraftfahrzeug nicht unterschritten wird.

10. Verfahren (200) gemäß einem der vorhergehenden Ansprüche,
wobei der Sensor (120) ein Radarsensor ist.
